# EUROPÄISCHE PATENTSCHRIFT

(11) **EP 0 545 114 B1**
(45) Veröffentlichungstag und Bekanntmachung des Hinweises auf die Patenterteilung: **16.04.1997**
(21) Anmeldenummer: 92119396.7
(22) Anmeldetag: 13.11.1992
(51) Int. Cl.: F23C 6/04, F23C 9/00

(54) **Einrichtung für eine Prozesswärmeerzeugung**
Device for generating process heat
Dispositif pour la production de chaleur industrielle

(30) Priorität: 05.12.1991 CH 3583/91
(43) Veröffentlichungstag der Anmeldung: 09.06.1993
(73) Patentinhaber: ASEA BROWN BOVERI AG, 5401 Baden (CH)
(72) Erfinder: Keller, Jakob, Prof. Dr., Redmond, Washington 98052 (US)
(74) Vertreter: Klein, Ernest

(56) Entgegenhaltungen:
- EP-A- 0 047 346
- EP-A- 0 436 113
- DE-A- 3 707 773
- GB-A- 2 011 051

## Beschreibung

### Technisches Gebiet

Die vorliegende Erfindung betrifft eine Einrichtung gemäss Oberbegriff des Anspruchs 1.

### Stand der Technik

In DE-A1-37 07 773 wird ein Verfahren zur schadstoffarmen Verbrennung beschrieben, das sich besonders zur Verbrennung von Brennstoffen mit gebundenem Stickstoff, zum Beispiel Schweröl, eignet. Hierbei wird Brennstoff in einer ersten Brennkammerstufe bei geeigneten unterstöchiometrischen Bedingungen vorzugsweise mit Vormischbrennern bei sehr hohen Temperaturen -höher als 1500°C- vorverbrannt. Im Anschluss an die unterstöchiometrische Verbrennungszone folgt eine Reduktionszone, in welcher sich die Gase ca. 0,3 Sekunden aufhalten sollten, damit die Bindungen zwischen Stickstoffatomen einerseits und Kohlenstoff- und Wasserstoffatomen andererseits unter Sauerstoffmangel gelöst werden. Eine optimale Prozessführung ergibt sich, wenn die Luft vor dem unterstöchiometrischen Verbrennungsprozess in geeigneter Weise vorgeheizt wird, damit die Förderung der NOx-Bildung sowohl durch HCN als auch NH3 möglichst vermieden werden kann. Im Anschluss an diese Reduktionszone folgt eine Zone, in welcher dem Brenngas gerade soviel Wärme entzogen wird, dass beim Uebergang in eine überstöchiometrischen Nachverbrennungsstufe, in welcher dem Brenngas die Restluft zugeführt wird, ein geeignetes Temperaturfenster -ca. 1150° bis 1350°C- erreicht wird, in welchem sich möglichst kein NOx bildet (Temperaturbegrenzung nach oben) und auch noch kein CO oder UHC "eingefroren" werden (Temperatur nach unten). Nun führt diese Temperaturfenster-Bedingung, insbesondere wenn die Verbrennungsluft stark vorgeheizt wird, zur Notwendigkeit eines sehr starken Wärmeentzugs im unterstöchiometrischen Bereich im Anschluss an die Reduktionszone. In einer solchen zweistufigen Verbrennungsanlage fällt gegebenenfalls in der unterstöchiometrischen Stufe vergleichbar viel oder gar mehr Wärme an als in der überstöchiometrischen Nachverbrennungsstufe. Dieser Umstand führt besonders dann zu gravierenden Nachteilen im Hinblick auf Kosten, gewünschte Anlagenleistung und/oder NOx-Emissionen, wenn existierende Feuerungsanlagen umgerüstet werden sollen. In diesem Fall wird der bereits existierende Kessel zu einem Nachbrenner mässiger Leistung "degradiert".

Aus EP-A1-0 047 346 ist ein Verfahren und eine Einrichtung zur Prozesswärmeerzeugung bekannt geworden, bei welchem durch Verbrennungsprodukte eines oder mehrerer fossiler Brennstoffe in einem Wärmeerzeuger ein Prozessmedium in zwei Stufen auf seine Endtemperatur aufgeheizt wird. In einer ersten Stufe, stromab einer Brennereinrichtung, findet eine unterstöchiometrische Verbrennung statt, wobei stromab davon die Verbrennungsgase abgekühlt werden. In einer nachgeschalteten Brennzone findet unter Zugabe einer Luftmenge die Verbrennung dieser Gase statt. Im Bereich der ersten Brennzone wirkt ein erster Wärmetauscher, während am Schluss der Nachbrennzone ein weiterer Wärmetauscher angeordnet ist. Eine Abgasrückführungsleitung steht in Wirkverbindung mit dem letztgenannten Wärmetauscher und mit der stromab wirkenden Nachbrennzone. Soll indessen die Verbrennung in der ersten Brennzone nach einem Vormischverfahren stattfinden, das erst zu einer Minimierung der NOx-Emissionen ohne Wirkungsgradverluste führt, so müssen Vorkehrungen getroffen werden, um innerhalb dieser kurz gehaltenen Strecke eine relative Wärmeentnahme zu bewerkstelligen, danach mit dem Potential eben dieser Wärme die Verbrennungsluft für die Vormischverbrennung kalorisch aufzubereiten und damit eine vollständige Verdampfung des dort eingedüsten Brennstoffes zu ermöglichen. Eine solche Vorkehrung geht aus dieser Druckschrift nicht hervor.

### Darstellung der Erfindung

Hier will die Erfindung Abhilfe schaffen. Der Erfindung, wie sie in den Ansprüchen gekennzeichnet ist, liegt die Aufgabe zugrunde bei einer Einrichtung der eingangs genannten Art den relativen Wärmeentzug in der unterstöchiometrischen Stufe beliebig zu reduzieren.

Der wesentlichen Vorteil der Erfindung ist darin zu sehen, dass im Anschluss an die Reduktionszone im unterstöchiometrischen Bereich nur ein Teil der Wärme entzogen wird, die zur Erreichung des optimalen Temperaturfensters im überstöchiometrischen Bereich entzogen werden müsste. Gegebenenfalls könnte auf einen Wärmeentzug im unterstöchiometrischen Bereich auch ganz verzichtet werden. Damit das ideale Temperaturfenster trotzdem erreicht werden kann, wird den unterstöchiometrischen Gasen vor der Restluftzufuhr oder zusammen mit der Restluft gekühltes Abgas zugeführt. Dabei kommt sowohl eine innere als auch eine externe Abgasrezirkulation in Frage. Auf diese weise gelingt es den relativen Wärmeentzug in der unterstöchiometrischen Stufe fast beliebig zu reduzieren und damit Kosten, Leistungs- und Baugrösse einer Retrofit-Anlage stark variabel zu halten. Um eine thermische Ueberbelastung der Brennkammerwände in der unterstöchiometrischen Stufe, in welcher hohe Temperaturen herrschen und nur wenig Wärme abgeführt wird, zu vermeiden, kann die Luftzufuhr und die in der Regel erforderliche Luftvorheizung in einem Gegenstrom-Konvektions-Wärmetauscher erfolgen, der die zugeführte Verbrennungsluft einerseits vorheizt und andererseits die Brennkammerwände kühlt.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnungen ein Ausführungsbeispiel der Erfindung näher erläutert. Alle für das unmittelbare Verständnis der Erfindung nicht erforderlichen Elemente sind fortgelassen. In den verschiedenen Figuren sind gleiche Elemente mit den gleichen Bezugszeichen versehen. Die Strömungsrichtung der Medien ist mit Pfeilen angegeben.

### Kurze Beschreibung der Zeichnungen

Es zeigt:
- Fig. 1: einen Prozesswärmeerzeuger,
- Fig. 2: einen Brenner von der Form eines Doppelkegelbrenners, in perspektivischer Darstellung, entsprechend aufgeschnitten und
- Fig. 3, 4, 5: entsprechende Schnitte durch die Ebenen III-III (= Fig. 3), IV-IV (= Fig. 4) und V-V (= Fig. 5), wobei diese Schnitte nur eine schematische Darstellung des Doppelkegelbrenners gemäss Fig. 2 wiedergeben.

### Wege zur Ausführung der Erfindung, gewerbliche Anwendbarkeit

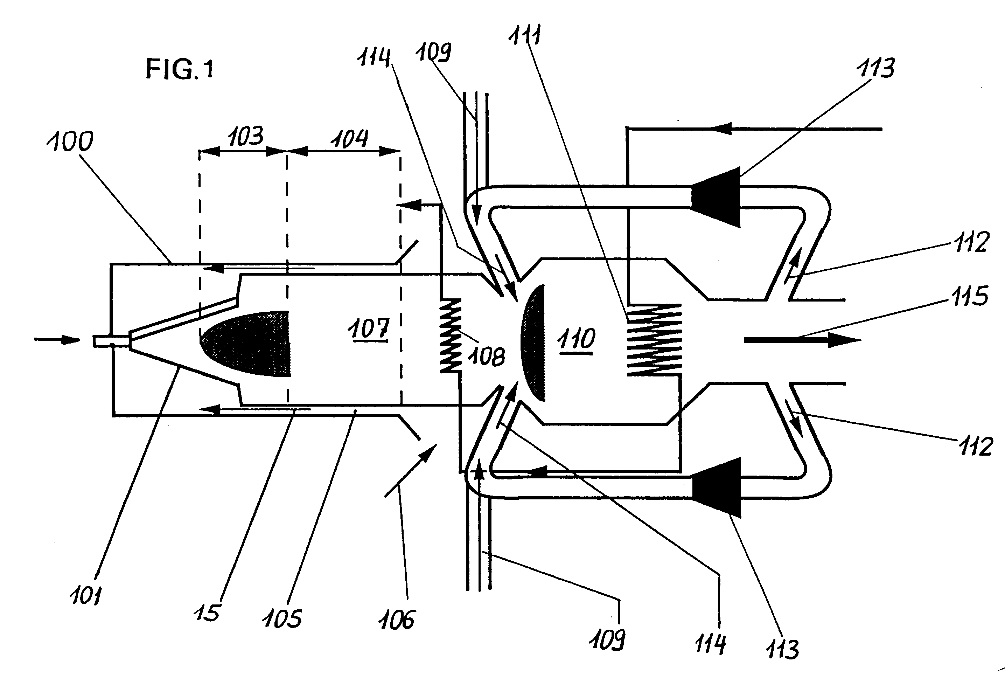

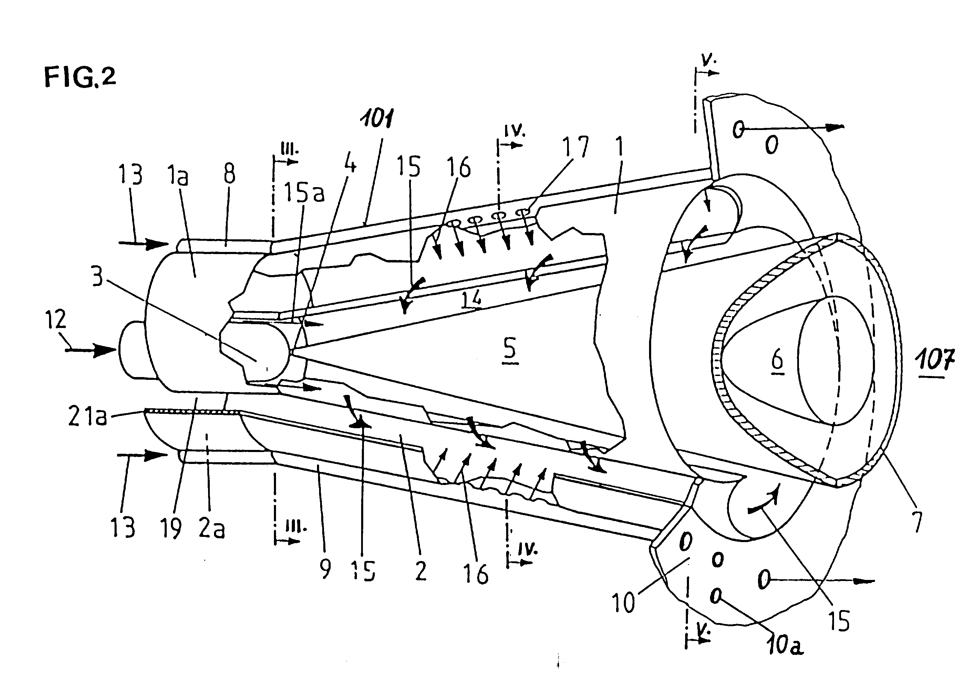

Fig. 1 zeigt einen Prozesswärmeerzeuger, der im wesentlichen aus einer Brennereinrichtung und aus zwei Verbrennungsstufen besteht. An höchster Stelle des Prozesswärmeerzeugers befindet sich eine Brennereinrichtung 101 für flüssige und/oder gasförmige Brennstoffe als Heizmittel. Insbesondere gut eignet sich hierfür ein Vormischbrenner, namentlich in der Bauart eines sogenannten Doppelkegelbrenners, wie er in den nachfolgenden Figuren 2-5 körperlich noch näher beschrieben wird. Grundsätzlich wird bei einem solchen Brenner 101 über mindestens eine mittig plazierte Düse vorzugsweise ein flüssiger Brennstoff 12 und über weitere Brennstoffdüsen, welche sich im Bereich der Lufteintrittsschlitze in den Innenraum des Brenners 101 befinden, vorzugsweise ein gasförmiger Brennstoff zugeführt. Im Brenner 101 selbst entsteht ein zündfähiges Gemisch, wobei die Reaktionszone 103 aus dieser Verbrennung bis in eine stromab des Brenners 101 gelagerte Vorbrennzone 107 reicht. Diese Vorbrennzone 107 bildet die Reduktionszone 104 des Prozesswärmeerzeugers. Etwa am Ende der Vorbrennzone 107 befinden sich die Eingänge eines gegen- über der Vorbrennzone 107 konzentrischen Luftkanals 105 über welchen eine Primärluft 106 dem Brenner 101 zugeführt wird. Der Luftkanal 105 dient als Luftvorwärmung der Primärluft 106, worauf der Brenner mit einer kalorisch aufbereiteten Verbrennungsluft 15 beliefert wird, und als Konvektionskühlung der Reduktionsstufe 104 dient. Diese kalorische Aufbereitung der Primärluft 106 vor dem unterstöchiometrischen Verbrennungsprozess ergibt eine optimale Prozessführung, denn die Förderung der NOx-Bildung sowohl durch HCN als auch NH3 wird damit möglichst vermieden. Allgemein erfolgt diese Verbrennung unterstöchiometrisch, und zwar vorzugsweise mit einer Luftzahl Lambda von 0,7, wobei diese Grösse als ungefähr optimaler Wert eines praktisch geeigneten Bereiches von Lambda 0,6-0,8 anzusehen ist. Wegen dieses Luftmangels und dementsprechend geringen und über das ganze Volumen der Vorbrennzone 107 gleichen Sauerstoffanteils in dieser brennungsphase fallen keine solchen Stickoxide als Zwischenprodukte an, die bei der nachfolgenden Abkühlung der Brenngase konserviert blieben. In dieser Vorverbrennungsphase fallen ausschliesslich sehr heisse, sauerstoffarme Brenngase an, in denen der brennstoffgebundene Stickstoff aufgrund der hohen Temperaturen und des Sauerstoffmangels grösstenteils reduziert wird. Nach dieser unterstöchiometrischen Vorverbrennung durchströmen die teilverbrannten Gase zunächst einen Wärmetauscher 108 beliebiger Bauart, in welchem ihnen grundsätzlich so viel Wärme entzogen wird, dass beim Uebergang in eine anschliessende überstöchiometrische Nachbrennzone 110 ein Tempearturfenster von 1150-1350°C erreicht wird, bei welchem sich noch kaum Stickoxide bilden können. Die Relativierung bei diesem Wärmeentzug hängt damit zusammen, dass diese Temperaturfenster-Bedingung, insbesondere in jenen Fällen, in welchen die Verbrennungsluft stark vorgeheizt wird, zur Notwendigkeit eines sehr starken Wärmeentzugs im unterstöchiometrischen Bereich, also im Anschluss an die Reduktionszone 104 wird. In einer vorliegenden zweistufigen Verbrennungsanlage ist es ohne weiteres möglich, dass in der unterstöchiometrischen Stufe vergleichbar viel oder gar mehr Wärme als in der überstöchiometrischen Stufe anfällt. Dieser Umstand ist, wie oben unter dem Stand der Technik bereits zur Ausführung gelangte, mit Nachteilen behaftet. Von daher wird hier vorgesehen, dass im Wärmetauscher 108 nur ein Teil der Wärme entzogen wird, welche an sich zur Erreichung des postulierten, also optimalen Temperaturfensters notwendig wäre. Dieser Wärmeentzug kann gegebenenfalls gegen Null streben. Damit nun das optimale Temperaturfenster in der Nachbrennzone 110 trotzdem bereitgestellt werden kann, wird den unterstöchiometrischen Brenngasen stromab der Vorbrennzone 107 und stromauf der Nachbrennzone 110, individuell oder zusammen mit einem Restluftzufuhr 109, ein gekühltes Abgas 112 zugeführt. Wird für eine gemeinsame Restluft/Abgas-Zuführung optiert, so werden die unterstöchiometrischen Gase mit einem Gemisch 114 aus Luft und Abgas gespiesen. Die aus der Verbrennung in der Nachbrennzone 110 entstandene Gase werden über einen Wärmetauscher 111 gekühlt, der sich etwa am Schluss der letztgenannten Zone 110 befindet, und im Zusammenhang mit dem ersten Wärmetauscher 108 als zweistufiger Wärmetauscher, wie die Leitungsführung sehr gut aufzeigt, ausgelegt ist, dabei kommt sowohl eine innere als auch eine exsterne Abgasrezirkulation in Frage. Die Förderung der Abgase 112 wird durch verschiedene Gebläse oder Strahlpumpen 113 übernommen. Die restlichen nicht benötigten Abgase 115 werden zum Kamin oder zu einem weiteren Verbraucher geführt. Durch die gezeigte Konfiguration gelingt es den relativen Wärmeentzug in der unterstöchiometrischen Stufe, also am Ende der Vorbrennzone 107, beliebig und nach Bedarf zu gestalten, womit die Wirtschaftlichkeit der Lösung allgemein, und insbesondere bei Retrofit-Anlagen, bei welchen die Möglichkeiten für eine Regelung, beispielsweise über die Brennstoffzufuhr, beschränkt sein können, maximiert wird.

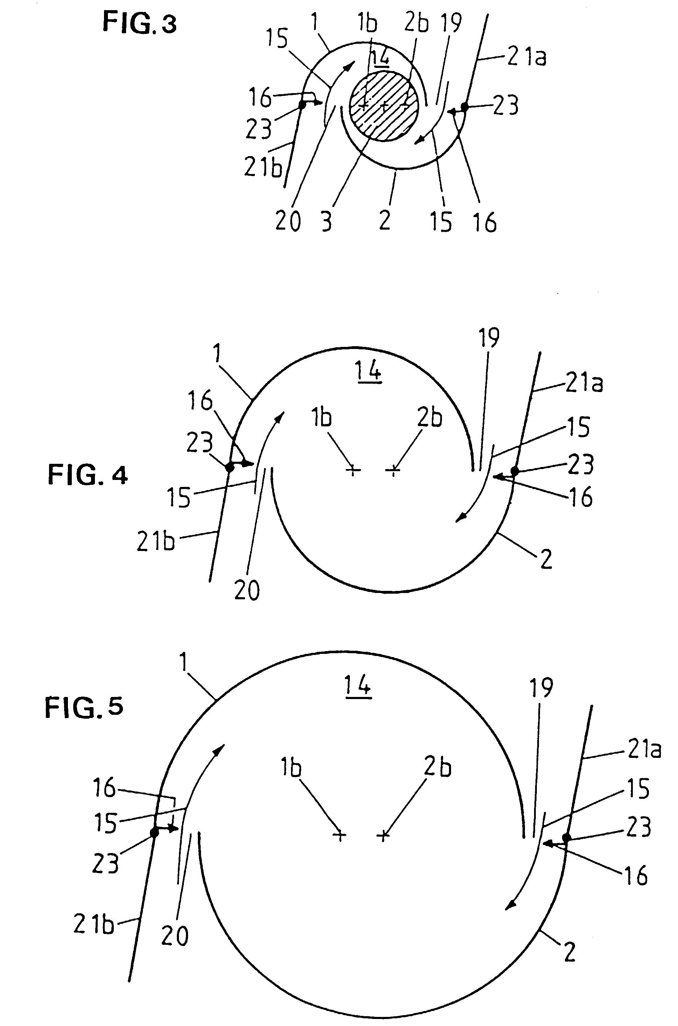

Um den Aufbau des Brenners 101 besser verstehen zu können, ist es vorteilhaft, wenn gleichzeitig zu der Fig. 2 die einzelnen darin ersichtlichen Schnitte, welche den Fig. 3-5 entsprechen, herangezogen werden. Des weiteren, um die Uebersichtlichkeit der Fig. 2 hoch zu halten, sind in ihr die nach Fig. 3-5 schematisch gezeigten Leitbleche 21a, 21b nur andeutungsweise aufgenommen worden. Im folgenden wird fortlaufend nach Bedarf bei der Beschreibung von Fig. 2 auf die anderen Figuren hingewiesen.

Der Brenner 101 gemäss Fig. 2 besteht aus zwei halben hohlen kegeligen Teilkörper 1, 2, die bezüglich ihrer Längssymmtrieachse radial versetzt zueinander, aufeinander stehen. Die Versetzung der jeweiligen Längssymmetrieachse 1b, 2b zueinander schafft auf beiden Seiten der Teilkörper 1, 2 in entgegengetzter Einströmungsanordnung jeweils einen tangentialen Lufteintrittsschlitz 19, 20 frei (Vgl. hierzu Fig. 3-5), durch welche die in der vorangehende Figur bereits erwähnte Verbrennungsluft 15 in den von den kegeligen Teilkörpern 1, 2 gebildeten Innenraum 14 von kegeliger Form einströmt. Die Kegelform der gezeigten Teilkörper 1, 2 in Strömungsrichtung weist einen bestimmten festen Winkel auf. Selbstverständlich, je nach Betriebseinsatz, können die Teilkörper 1, 2 in Strömungsrichtung eine progressive oder degressive Kegelneigung aufweisen. Die beiden letztgenannten Formen sind zeichnerisch nicht erfasst, da sie ohne weiteres nachempfindbar sind. Die beiden kegeligen Teilkörper 1, 2 weisen je einen zylindrischen Anfangsteil 1a, 2a auf, welche, analog zu den Teilkörper 1, 2 versetzt zueinander verlaufen, so dass die tangentialen Lufteintrittsschlitze 19, 20 durchgehend über die ganze Länge des Brenners 101 vorhanden sind. Diese Anfangsteile können auch eine andere geometrische Form einnehmen, sie können bisweilen auch ganz weggelassen werden. In diesem zylindrischen Anfangsteil 1a, 2a ist eine Düse 3 untergebracht, über welche ein Brennstoff 12, vorzugsweise Oel, oder ein Brennstoffgemisch in den Innenraum 14 des Brenners 101 eingedüst wird. Diese Brennstoffeindüsung 4 fällt in etwa mit dem engsten Querschnitt des Innenraumes 14 zusammen. Eine weitere Brennstoffzufuhr 13, hier vorzugsweise mit einem gasförmigen Brennstoff, wird über je eine in die Teilkörper 1, 2 integrierte Leitung 8, 9 herangeführt, und über eine Anzahl Düsen 17 der Verbrennungsluft 15 zugemischt. Diese Zumischung findet im Bereich des Eintrittes in den Innenraum 14 statt, dies um eine optimale geschwindigkeitsbedingte Zumischung 16 zu erreichen. Selbstverständlich ist ein Mischbetrieb mit beiden Brennstoffen 12, 13 über die jeweilige Eindüsung möglich. Vorbrennzonenseitig geht die Ausgangsöffnung des Brenners 101 in eine Frontwand 10 über, in welcher eine Anzahl Bohrungen 10a vorgesehen sind, dies um bei Bedarf eine bestimmte Menge Verdünnungsluft oder Kühlluft in den Innenraum der Vorbrennzone 107 einzudüsen. Der durch die Düse 3 bereitgestellte flüssige Brennstoff 12 wird in einem spitzen Winkel in den Innenraum 14 des Brenners 101 eingedüst, dergestalt, dass sich auf der ganzen Länge des Brenners 101 bis hin zur Brenneraustrittsebene ein möglichst homogenes kegeliges Sprühbild einstellt, was nur möglich ist, wenn die Innenwände der Teilkörper 1, 2 durch die Brennstoffeindüsung 4, bei welcher es sich beispielsweise um eine luftunterstützte Düse oder um eine Druck-Zerstäubung handelt, nicht benetzt werden. Zu diesem Zweck wird das kegelige flüssige Brennstoffprofil 5 von der tangential einströmenden Verbrennungsluft 15 und, nach Bedarf, von einem weiteren axial herangeführten Verbrennungsluftstrom 15a umschlossen. In axialer Richtung wird die Konzentration des eingedüsten flüssigen Brennstoffes 12, wobei es sich ohne weiteres auch um ein Gemisch handeln kann, fortlaufend durch die durch die tangentialen Lufteintrittsschlitze 19, 20 in den Innenraum 14 des Brenners 101 einströmenden Verbrennungsluft 15, bei welcher es sich auch um ein Brennstoff/Luft-Gemisch handeln kann, und allenfalls unter Mithilfe des anderen Verbrennungsluftstromes 15a, fortlaufend abgebaut. Im Zusammenhang mit der Eindüsung des flüssigen Brennstoffes 12 wird im Bereich des Wirbelaufplatzens, also im Bereich der Rückströmzone 6, die optimale homogene Brennstoffkonzentration über den Querschnitt erreicht. Die Zündung erfolgt an der Spitze der Rückstromzone 6. Erst an dieser Stelle kann eine stabile Flammenfront 7 entstehen. Ein Rückschlag der Flamme ins Innere des Brenners 101, wie dies bei bekannten Vormischstrekken potentiell immer der Fall sein kann, wogegen dort über komplizierte Flammenhalter Abhilfe gesucht wird, ist hier nicht zu befürchten. Ist die Verbrennungsluft 15, 15a vorgewärmt, so stellt sich eine beschleunigte ganzheitliche Verdampfung des Brennstoffes ein, bevor der Punkt am Ausgang des Brenners 101 erreicht ist, an welchem die Zündung des Gemisches stattfindet. Die Aufbereitung der Verbrennungsluftströme 15, 15a kann durch die Zumischung von rezirkuliertem Abgas erweitert werden. Bei der Gestaltung der kegeligen Teilkörper 1, 2 hinsichtlich des Kegelwinkels und der Breite der tangentialen Lufteintrittsschlitze 19, 20 sind enge Grenzen einzuhalten, damit sich das gewünschte Strömungsfeld der Verbrennungsluftströme mit ihrer Rückströmzone 6 im Bereich der Brennermündung zu einer Flammenstabilisierung einstellt. Allgemein ist zu sagen, dass eine Veränderung der Breite der Lufteintrittsschlitze 19, 20 zu einer Verschiebung der Rückströmzone 6 führt: Die Verschiebung ist stromabwärts bei einer Verkleinerung der Breite der Lufteintrittsschlitze 19, 20. Es ist indessen festzuhalten, dass die einmal fixierte Rückströmzone 6 an sich positionsstabil ist, denn die Drallzahl nimmt in Strömungsrichtung im Bereich des Brenners 101 zu. Wie bereits angedeutet, lässt sich die Axialgeschwindigkeit durch eine entsprechende Zuführung des axialen Verbrennungsluftstromes 15a verändern. Die Komnstruktion des Brenners eignet sich vorzüglich, die tangentialen Lufteintrittsschlitze 19, 20, den Bedürfnissen entsprechend, zu verändern., womit ohne Veränderung der Baulange des Brenners 101 eine relativ grosse betriebliche Bandbreite erfasst werden kann.

Aus Fig. 3-5 geht nunmehr die geometrische Konfiguration der Leitbleche 21a, 21b hervor. Sie haben Strömungseinleitungsfunktionen zu erfüllen, wobei sie, entsprechend ihrer Länge, das jeweilige Ende der kegeligen Teilkörper 1, 2 in Anströmungsrichtung der Verbrennungsluft 15 in den Innenraum 14 des Brenners 101 verlängern. Die Kanalisierung der Verbrennungsluft 15 in den Innenraum 14 des Brenners 101 kann durch Oeffnen bzw. Schliessen der Leitbleche 21a, 21b um einen im Bereich der tangentialen Lufteintrittsschlitze 19, 20 plazierten Drehpunkt 23 optimiert werden, insbesondere ist dies vonnöten, wenn die ursprüngliche Spaltgrösse der tangentialen Lufteintrittsschlitze 19, 20 verändert wird. Selbstverständlich kann der Brenner 101 auch ohne Leitbleche 21a, 21b betrieben werden, oder es können andere Hilfsmittel hierfür vorgesehen werden.

## Patentansprüche

1. Einrichtung für eine Prozesswärmeerzeugung, bestehend aus mindestens einem Brenner (101), wobei sich stromab des Brenners eine Vorbrennzone (107) anschliesst, im Brennbereich dieser Vorbrennzone ein Wärmetauscher (108) angeordnet ist, stromab des Wärmetauschers eine Nachbrennzone (110) folgt, ein weiterer Wärmetauscher (111) am Schluss der Nachbrennzone angeordnet ist, und stromab des weiteren Wärmetauschers eine Abgasrückführungsleitung (112) abzweigt, welche im Bereich der Nachbrennzone vor oder zusammen mit einer Luftzuführungsleitung (109) endet, dadurch gekennzeichnet, dass am Ende der Vorbrennzone (107) Eingänge eines gegenüber der Vorbrennzone konzentrischen Luftkanals (105) angeordnet sind, über welchen dem Brenner (101) vorgewärmte Primärluft (106) zuführbar ist.

2. Einrichtung nach Anspruch 1, dadurch gekennzeichnet, dass der Vormischbrenner (101) in Strömungsrichtung aus mindestens zwei aufeinander positionierten hohlen, kegelförmigen Teilkörpern (1, 2) besteht, deren Längssymmetrieachsen (1b, 2b) zueinander radial versetzt verlaufen, dass die versetzt verlaufenden Längssymmetrieachsen strömungsmässig entgegengesetzte tangentiale Eintrittsschlitze (19, 20) für einen Verbrennungsluftstrom (15) schaffen, dass im von den kegelförmigen Teilkörpern gebildeten Kegelhohlraum (14) mindestens eine Düse (3) plaziert ist, deren Eindüsung (4) des Brennstoffes (12) mittig der zueinander versetzt verlaufenden Längssymmetrieachsen der kegelförmigen Teilkörper liegt.

3. Einrichtung nach Anspruch 2, dadurch gekennzeichnet, dass axial über die Düse (3) ein weiterer Verbrennungsluftstrom (15a) in den Kegelhohlraum (14) zuführbar ist.

4. Einrichtung nach Anspruch 2, dadurch gekennzeichnet, dass im Bereich der tangentialen Eintrittsschlitze (19, 20) weitere Düsen (17) zur Eindüsung eines weiteren Brennstoffes (13) angeordnet sind.

5. Einrichtung nach Anspruch 2, dadurch gekennezichnet, dass sich die Teilkörper (1, 2) in Strömungsrichtung unter einem festen Winkel kegelig erweitern.

6. Einrichtung nach Anspruch 2, dadurch gekennzeichnet, dass die Teilkörper (1, 2) in Strömungsrichtung eine zunehmende Kegelneigung aufweisen.

7. Einrichtung nach Anspruch 2, dadurch gekennzeichnet, dass die Teilkörper (1, 2) in Strömungsrichtung eine abnehmende Kegelneigung aufweisen.

## Claims

1. Apparatus for generating process heat, which comprises at least one burner (101), said burner being adjoined, downstream thereof, by a preburning zone (107), a heat exchanger (108) being disposed in the combustion region of said preburning zone, an afterburning zone (110) following downstream of the heat exchanger, a further heat exchanger (111) being disposed at the end of the afterburning zone, and a waste gas return line (112) branching off downstream of the further heat exchanger, said waste gas return line ending in or near the afterburning zone before or together with an air supply line (109), characterized in that at the end of the preburning zone (107) inlets of an air duct (105) are disposed, which is concentric with respect to the preburning zone and via which the burner (101) can be supplied with preheated primary air (106).

2. Apparatus according to Claim 1, characterized in that the premix burner (101) in the flow direction comprises at least two hollow, conical component bodies (1, 2) positioned above one another, whose longitudinal axes of symmetry (1b, 2b) are radially offset with respect to one another, in that the offset axes of longitudinal symmetry provide tangential entry slits (19, 20), which in terms of flow are opposite to one another, for a combustion air stream (15), in that in the conical cavity (14) defined by the conical component bodies at least one nozzle (3) is placed whose injection (4) of the fuel (12) is situated centrally with respect to the longitudinal axes of symmetry, offset with respect to one another, of the conical component bodies.

3. Apparatus according to Claim 2, characterized in that a further combustion air stream (15a) can be fed in axially via the nozzle (3) into the conical cavity (14).

4. Apparatus according to Claim 2, characterized in that near the tangential entry slits (19, 20) further nozzles (17) for injecting a further fuel (13) are disposed.

5. Apparatus according to Claim 2, characterized in that the component bodies (1, 2) are conically flared in the direction of flow of a fixed angle.

6. Apparatus according to Claim 2, characterized in that the slope of the conical profile of the component bodies (1, 2) increases in the direction of flow.

7. Apparatus according to Claim 2, characterized in that the slope of the conical profile of the component bodies (1, 2) decreases in the direction of flow.

## Revendications

1. Dispositif pour la production de chaleur industrielle, se composant d'au moins un brûleur (101), dans lequel une zone de précombustion (107) se raccorde en aval du brûleur, un échangeur de chaleur (108) est disposé dans la région de combustion de cette zone de précombustion, une zone de post-combustion (110) suit en aval de l'échangeur de chaleur, un autre échangeur de chaleur (111) est disposé à la suite de la zone de post-combustion, et en aval de l'autre échangeur de chaleur est dérivée une conduite (112) de recyclage des gaz d'échappement, qui se termine dans la région de la zone de post-combustion avant ou en même temps qu'une conduite d'arrivée d'air (109), caractérisé en ce qu'à la fin de la zone de précombustion (107) sont disposées des entrées d'un canal à air (105) concentrique par rapport à la zone de précombustion, par lequel un air primaire préchauffé (106) peut être fourni au brûleur (101).

2. Dispositif suivant la revendication 1, caractérisé en ce que le brûleur à prémélange (101) se compose, dans le sens de l'écoulement, d'au moins deux corps partiels (1, 2) coniques creux placés l'un au-dessus de l'autre, dont les axes de symétrie longitudinaux (1b, 2b) sont décalés radialement l'un par rapport à l'autre, en ce que les axes de symétrie longitudinaux décalés font apparaître des fentes d'entrée tangentielles (19, 20) à écoulement de sens opposé pour un courant d'air de combustion (15), en ce que dans l'espace conique creux (14) formé par les corps partiels coniques est placé au moins un gicleur (3), dont l'injection (4) du combustible (12) est placée au milieu des axes de symétrie longitudinaux décalés l'un par rapport à l'autre des corps partiels coniques.

3. Dispositif suivant la revendication 2, caractérisé en ce qu'un autre courant d'air de combustion (15a) peut être introduit axialement dans l'espace conique creux (14) par le gicleur (3).

4. Dispositif suivant la revendication 2, caractérisé en ce que d'autres gicleurs (17) sont disposés dans la région des fentes d'entrée tangentielles (19, 20) pour l'injection d'un autre combustible (13).

5. Dispositif suivant la revendication 2, caractérisé en ce que les corps partiels (1, 2) s'évasent en un cône dans le sens de l'écoulement avec un angle fixe.

6. Dispositif suivant la revendication 2, caractérisé en ce que les corps partiels (1, 2) présentent une conicité croissante dans le sens de l'écoulement.

7. Dispositif suivant la revendication 2, caractérisé en ce que les corps partiels (1, 2) présentent une conicité décroissante dans le sens de l'écoulement.
